# EUROPÄISCHE PATENTSCHRIFT

(11) **EP 1 418 071 B1**
(45) Veröffentlichungstag und Bekanntmachung des Hinweises auf die Patenterteilung: **09.05.2007**
(21) Anmeldenummer: 03024231.7
(22) Anmeldetag: 22.10.2003
(51) Int. Cl.: B60H 1/34

(54) **Luftleitvorrichtung**
Air directing device
Dispositif pour diriger l'air

(30) Priorität: 05.11.2002 DE 20217164 U
(43) Veröffentlichungstag der Anmeldung: 12.05.2004
(73) Patentinhaber: REUM GmbH & Co. Betriebs KG, 74736 Hardheim (DE)
(72) Erfinder: Müller, Robert, 74722 Buchen (DE)
(74) Vertreter: Maser, Jochen

(56) Entgegenhaltungen:
- EP-A- 1 279 533
- EP-A- 1 332 900
- DE-A- 3 533 464
- DE-U- 7 233 793
- US-A1- 2001 014 583

## Beschreibung

Die vorliegende Erfindung betrifft eine Luftleitvorrichtung zum Einleiten von auf einer Rückseite der Vorrichtung zugeführten Luft in einen Raum, insbesondere einen Innenraum eines Fahrzeuges, mit einer als Luftleitkörper ausgebildete Trägerstruktur, die eine Vielzahl von nebeneinander angeordneten Ausnehmungen aufnimmt, die in einen Austrittsbereich münden und der Austrittsbereich eine Deckschicht umfasst, welche Ausnehmungen aufweist.

Derartige Luftleitvorrichtungensind aus der DE 35 33 464 A1 bekannt und weisen sichtbare Horizontal- und Vertikallamellen auf, welche über eine Mechanik unter manueller Betätigung geschwenkt werden. Diese Lamellen, zwischen denen unmittelbar die Luft heraustritt, weisen eine sogenannte offene Bauweise auf. Die Optik beziehungsweise das Design des Armaturenbrettes eines Kraftfahrzeuges wird dadurch stark gestört. Die Luftleitvorrichtung wirkt wie ein Fremdkörper. Zur Verbesserung der Optik und zur Verringerung von Verschmutzungen ist bekannt, die offene Bauweise durch eine Abdeckung zu verschließen. Diese Abdeckung weist an einer zu den Lamellen weisenden Seite ein Vlies auf. Durch diese Ausgestaltung wird das Design des Armaturenbrettes nur geringfügig verbessert. Eine Luftleitung ist nicht ermöglicht.

Der vorliegenden Erfindung liegt die Aufgabe zugrunde, eine Luftleitvorrichtung der eingangs genannten Art anzugeben, die eine Luftleitung, eine wirtschaftliche Herstellung und Montage ermöglicht und höchsten designerischen Ansprüchen gerecht wird.

Die erfindungsgemäße Luftleitvorrichtung ist durch die Merkmale des unabhängigen Anspruchs 1 gegeben. Vorteilhafte Ausgestaltungen und Weiterbildungen sind Gegenstand der jeweiligen abhängigen Ansprüche.

Die erfindungsgemäße Luftleitvorrichtung gemäß dem Anspruch 1 zeichnet sich dadurch aus, dass eine Trägerstruktur mit Ausnehmungen vorgesehen ist, die in einen Austrittsbereich münden und dass der Austrittsbereich eine Deckschicht umfasst, welche Öffnungen aufweist, die deckungsgleich zu den Ausnehmungen der Trägerstruktur vorgesehen und in einem Arbeitsgang aus einem Material, insbesondere als Spritzgussteil, hergestellt sind. Dadurch ist eine wirtschaftliche Herstellung von Luftleitvorrichtungen gegeben. Durch das gemeinsame Herstellen von Deckschicht und Trägerschicht in einem Arbeitsgang und aus einem Material wird des Weiteren eine hohe Präzision in der Deckungsgleichheit der einander zugeordneten Ausnehmungen erzielt. Der eine Arbeitsgang kann mehrere Schritte umfassen. Beispielsweise ist ein Nachdrücken vorgesehen, um einem Schwindungsvorgang entgegenzuwirken. Durch diese erfindungsgemäße Ausgestaltung der Luftleitvorrichtung ist des Weiteren ermöglicht, dass die Trägerstruktur als Luftleitkörper ausgebildet ist und eine Luftführung bewirkt und gleichzeitig als Stützstruktur eine Deckschicht trägt, die als Designoberfläche vorgesehen ist. Die Trägerstruktur und Deckschicht bilden eine Baugruppe. Dadurch ist eine Montageerleichterung beim Einsetzen der Luftleitvorrichtung in ein Armaturenbrett gegeben. Darüber hinaus ist eine Anordnung geschaffen, welche die Umsetzung der designerischen Ansprüche zur Gestaltung eines Armaturenbrettes in einem Kraftfahrzeug ermöglicht.

Eine alternative erfindungsgemäße Ausgestaltung der Luftleitvorrichtung, welche als ein aus zwei Komponenten gespritztes Kunststoffteil ausgebildet ist, weist den Vorteil auf, dass das Material für die Deckschicht abweichend von dem Material für die Trägerstruktur ausgewählt werden kann, wodurch die Materialauswahl für die Deckschicht erhöht wird. Durch die Materialauswahl oder Materialanpassung kann eine kostengünstige Herstellung der Luftleitvorrichtung erzielt werden, wobei zur Erfüllung der designerischen Ansprüche für die Deckschicht insbesondere sehr hochwertige Materialien verwendet werden und für die Trägerstruktur kostengünstige Kunststoffmaterialien eingesetzt werden, um eine Stütz- und Luftleitfunktion zu erfüllen. Gleichzeitig kann durch die Herstellung der Deckschicht und der Trägerschicht in einem Arbeitsgang eine optimale Verbindung zwischen den beiden Schichten und somit auch eine höhere Steifigkeit erzielt werden. Diese wie auch die zuvor genannte Herstellung von Luftleitvorrichtungen ermöglichen des weiteren, dass die Oberfläche, die Form, die Geometrie und die Ausgestaltung der Luftleitvorrichtung an die Designanforderungen eines Armaturenbrettes oder eines Instrumententafelbauteils anpassbar sind.

Nach einer weiteren alternativen Ausführungsform der Erfindung ist vorgesehen, dass die Deckschicht oder Trägerschicht als Einlegeteil ausgebildet und die weitere Schicht angespritzt oder hinterspritzt ist. Durch dieses Verfahren können vorteilhafterweise Deckschichten, die beispielsweise aus einer Aluminium- oder Metalllegierung, insbesondere als Folie ausgebildet sind, mit einer aus Kunststoff ausgebildeten Trägerstruktur verbunden werden. Vorzugsweise greifen Schieber oder Stifte zur Herstellung von Kanal-, Loch-, Wabenstrukturen oder dergleichen in der Trägerstruktur an Ausnehmungen der Deckschicht an, so dass diese deckungsgleich zu den Kanälen der Trägerstruktur positioniert sind.

Um den optischen Ansprüchen über einen langen Zeitraum gerecht zu werden und eine Langlebigkeit zu erzielen, ist die Luftleitvorrichtung aus einer thermoplastischen Materialpaarung hergestellt, die vorzugsweise licht- und/oder temperaturfest ist.

Als Material für ein Kunststoffspritzteil, bei dem die Deckschicht als auch die Trägerschicht aus Kunststoff bestehen, kann für die Deckschicht beispielsweise PC-ABS und für die Trägerstruktur dazu geeignete Thermoplaste eingesetzt werden. Alternativ können auch Polyamid als Deckschichtmaterial und hierzu geeignete Thermoplaste für die Trägerstruktur verwendet werden. Weitere Weich- oder Hartkunststoffpaarungen als auch Paarungen mit thermoplastischen Elastomeren können vorgesehen sein. Vorzugsweise werden für die Herstellung der Luftleitvorrichtungen gut fließfähige Kunststoffe eingesetzt, um die Herstellungszeiten zu verkürzen.

Eine vorteilhafte Weiterbildung sieht vor, dass die Herstellung der Luftleitvorrichtung durch Anspritzen oder Hinterspritzen eines Einlegeteils erfolgt und zumindest die in den Fahrzeuginnenraum weisende Oberfläche der Deckschicht in den fertigen Einbauzustand überführbar ist. Dadurch kann beispielsweise eine Schicht oder Folie in eine Spritzgussform ohne vorheriges Umformen an einen Verlauf der endgültigen Oberfläche als Deckschicht eingelegt werden. Durch das thermoplastische Anspritzen oder Hinterspritzen der Trägerstruktur wird die Folie in die Endform übergeführt oder umgeformt und die Trägerschicht zur Schicht oder zur Folie festgelegt. Somit können zwei Arbeitsschritte in einem Arbeitsschritt zusammengefasst werden. Bevorzugt werden metallische Schichten oder Folien oder umformbare Laminate eingesetzt. Auch weitere Materialen, wie beispielsweise thermoplastische Kunststoffe, können vorgesehen sein.

Die Ausnehmungen beziehungsweise die Kanäle der Trägerstruktur weisen vorzugsweise einen kreisförmigen Durchmesser in einem Bereich zwischen 0,5 mm bis 10 mm, insbesondere zwischen 2 mm bis 5 mm, auf, wodurch besonders gute Strömungseigenschaften erzielt werden.

Nach einer bevorzugten Ausgestaltung ist vorgesehen, dass die Ausnehmungen der Trägerstruktur sich über eine Länge von wenigstens 3 mm erstrecken. Dadurch wird eine Luftführung und eine Stabilisierung der Luftströmung ermöglicht, so dass eine gezielte Umlenkung der Luft aus dem Luftverteilersystem in den Innenraum eines Fahrzeuges ermöglicht ist.

Die im Austrittsbereich der Trägerstruktur vorgesehenen Ausnehmungen sind in einer bevorzugten Ausgestaltung rasterförmig vorgesehen. Beispielsweise sind Gruppen von Ausnehmungen mit einer Anzahl von 3 x 3 oder 4 x 3 oder 4 x 4 Ausnehmungen zusammengefasst, und zwischen benachbarten Gruppen ist ein zumindest geringfügig verstärkter Wandabschnitt vorgesehen. Dadurch kann die Steifigkeit der Trägerstruktur erhöht werden. Des weiteren wird bei der Trägerstruktur als Kunststoffspritzteil eine vereinfachte Entformung ermöglicht. Diese rasterförmige Anordnung kann auch in Abhängigkeit von geforderten Strukturen der Deckschicht als Designoberfläche ausgebildet sein, so dass eine Gruppe von Ausnehmungen eine beliebige geometrische Anordnung, Anzahl und/oder Ausgestaltung der Ausnehmungen aufweist, welche sich mehrfach auf der Designoberfläche wiederholt und an das Design des Instrumententafelbauteils angepasst ist.

Unter der deckungsgleichen Anordnung von Ausnehmungen der Trägerstruktur und der Deckschicht ist auch zu verstehen, dass beispielsweise mehrere Ausnehmungen der Deckschicht einer Ausnehmung der Trägerstruktur oder umgekehrt zugeordnet sind.

Die Erfindung sowie weitere vorteilhafte Ausführungsformen und Weiterbildungen derselben werden im folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: einen schematischen Schnitt durch eine Belüftungsvorrichtung mit einem Instrumententafelbauteil,
- Figur 2: eine schematische, perspektivische Darstellung der Belüftungsvorrichtung gemäß Figur 1,
- Figur 3: eine perspektivische Ansicht auf eine Luftleitvorrichtung,
- Figur 4: einen schematischen Schnitt in perspektivischer Ansicht der Luftleitvorrichtung gemäß Figur 3 und
- Figur 5: einen schematischen Schnitt in perspektivischer Ansicht einer alternativen Luftleitvorrichtung gemäß Figur 3.

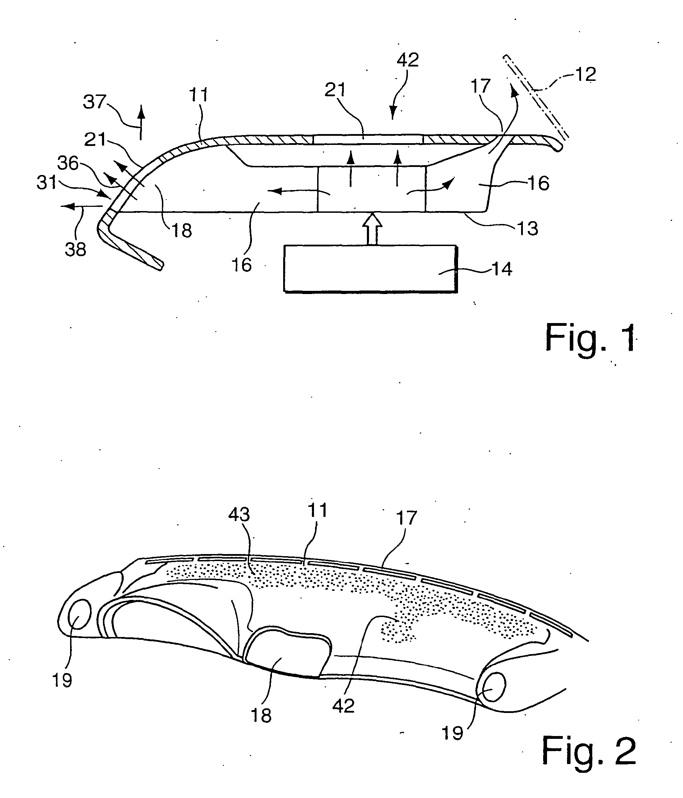

In den Figuren 1 und 2 ist ein Instrumententafelbauteil 11 in bekannter Art und Weise dargestellt. Das Instrumententafelbauteil 11 erstreckt sich hierbei unterhalb einer Windschutzscheibe 12 eines Fahrzeuges über die gesamte Breite des Innenraums des Fahrzeuges. Unterhalb des Instrumententafelbauteils 11 ist ein Luftverteilsystem 13 vorgesehen, welches von einer Steuereinrichtung 14 angesteuert ist. Über Kanäle 16 des Luftverteilsystems 13 wird einer Defrosterdüse 17 strömungsförmig gerichtete Luft zugeführt. Des weiteren wird über einen weiteren Kanal 16 einer Mitteldüse 18 strömungsförmig gerichtete Luft zugeführt. Darüber hinaus ist auf beiden Seiten des Instrumententafelbauteils 11 jeweils ein weiterer düsenförmiger Austrittsbereich als Seitendüse 19 vorhanden, über den der Innenraum mit strömungsgerichteter Luft versorgt werden kann. Die Steuerung der Luftmenge und der Lufttemperatur übernimmt die Steuereinrichtung 14.

Die Mitteldüse oder Mitteldüsen 18 als auch die Seitendüsen 19 weisen in der Fläche unterschiedlich große Austrittsbereiche auf, in denen Luftleitvorrichtungen 21 eingesetzt und zum Instrumententafelbauteil 11 fixiert sind. Diese Luftleitvorrichtungen 21 bilden somit einen Teil des Instrumententafelbauteils 11 und erfordern ein optisch ansprechendes Design, um den Gesamteindruck nicht zu beeinträchtigen.

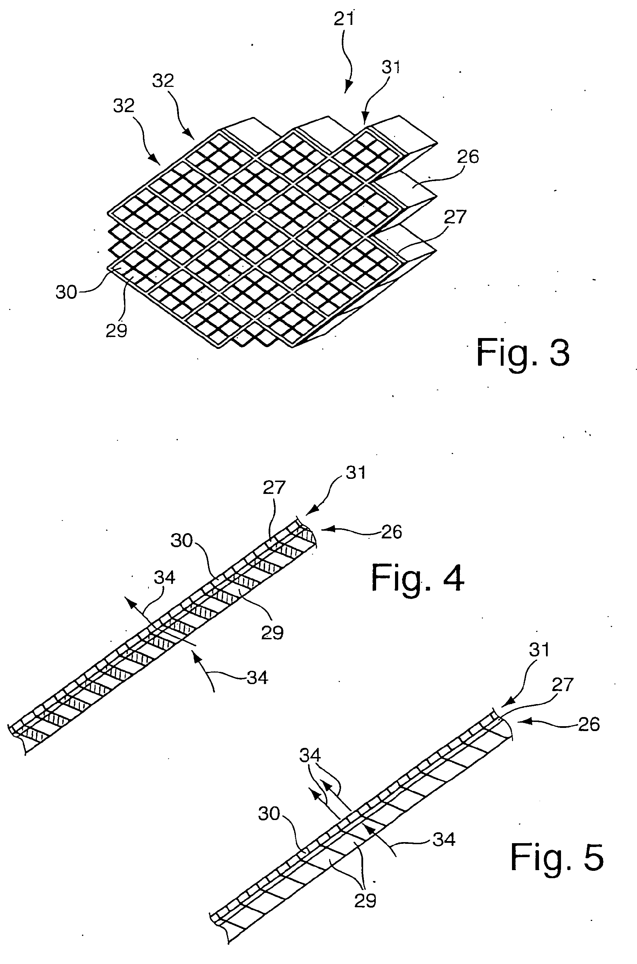

Die Luftleitvorrichtung 21, die nachfolgend in den Figuren 3 und 4 näher beschrieben ist, umfasst eine Trägerstruktur 26 und eine Deckschicht 27 oder eine Deckfläche. Ein Austrittsbereich 31 der Luftleitvorrichtung 21 ist an das Design des Instrumententafelbauteils 11 in der Form, Farbe, Geometrie, Struktur und dergleichen angepasst oder darauf abgestimmt. Die Trägerstruktur 26 umfasst eine Vielzahl von Ausnehmungen 29 als Lochstruktur, welche als kreisförmige Kanäle ausgebildet sind, die einen Durchmesser im Bereich von 0,5 mm bis 10 mm, insbesondere in einem Bereich von 3 mm bis 7 mm, aufweisen. Die Innenkontur der Ausnehmungen 29 kann auch weitere geometrische Formen umfassen, wie beispielsweise eine Wabenstruktur, insbesondere dann, wenn diese Austrittsöffnungen im Austrittsbereich 31 einer Designvorgabe entsprechen sollen. Die Ausnehmungen 29 sind rasterförmig zueinander vorgesehen. Im Ausführungsbeispiel gemäß Figur 3 ist eine Anordnung von 3 x 3 Ausnehmungen 29 als eine Gruppe 32 vorgesehen. Die Anzahl und die Anordnung sind nur beispielhaft und beliebig variabel. Zwischen den einzelnen Gruppen 32 der rasterförmigen Zuordnung der Ausnehmungen 29 sind verstärkte Zwischenwände vorgesehen.

Die Deckschicht 27 ist deckungsgleich auf der Trägerstruktur 26 vorgesehen, so dass die Ausnehmungen 30 der Deckschicht 29 mit den Ausnehmungen 30 der Trägerschicht 26 fluchten. Vorteilhafterweise ist die Form der Ausnehmungen 30 der Deckschicht 27 an die Form der Ausnehmungen 29 der Trägerschicht 26 im Austrittsbereich 31 angepasst. Die Trägerschicht 26 weist zumindest eine Dicke von 3 mm für die Ausnehmungen 29 auf, um eine Luftführung zu erzielen. Die die Trägerstruktur 26 durchquerenden Ausnehmungen 29 sind vorzugsweise zylindrisch ausgebildet. Ebenso können diese auch konisch zur Bildung einer Düsenform ausgebildet sein.

In Figur 4 ist ein Schnitt einer Luftleitvorrichtung 21 gemäß Figur 3 perspektivisch dargestellt. Die Deckschicht 27 ist im Austrittsbereich 31 ausschließlich auf der Trägerstruktur 26 vorgesehen und fixiert, so dass gemäß den Pfeilen 34 die Luftströmung von einer Rückseite der Luftleitvorrichtung 21 durch die Ausnehmungen 29 und 30 hindurchströmen und in den Innenraum gerichtet werden und ungestört austreten kann. Durch die Anstellung der Ausnehmungen in der Trägerstruktur 26 oder die Ausrichtung der Luftleitvorrichtung 21 zum Instrumententafelbauteil 11 kann die Austrittsrichtung 29, 30 der Luftleitvorrichtung 21 der Luftströmung eingestellt werden. Die Austrittsrichtung der Luftströmung ist durch die Pfeile 36 dargestellt. Beispielsweise in Figur 1 sind die Ausnehmungen 29 lotrecht zur Oberfläche vorgesehen. Diese Ausrichtung kann an den Anwendungsfall angepasst sein, so dass beispielsweise auch eine wesentlich steiler nach oben gerichtete Austrittsrichtung, wie durch den Pfeil 37 dargestellt ist, als auch eine wesentlich flachere Austrittsrichtung, wie durch den Pfeil 38 dargestellt ist, ermöglicht sein kann. Dabei sind dann die Ausnehmungen 29 in einem entsprechenden Winkel zum Austrittsbereich 31 beziehungsweise zum Oberflächenverlauf der Deckschicht 27 oder der Deckfläche vorzusehen. Beim Einsatz einer Luftleitvorrichtung 21 mit einer Trägerschicht 26 und einer aus Streckmetall ausgebildeten Deckschicht 27 kann eine unterstützende Wirkung der Luftführung durch die Struktur des Streckmetalls erzielt werden.

Die Luftleitvorrichtung 21 gemäß Figuren 3 und 4 weist eine im Verhältnis zur Trägerstruktur 26 dünne Deckschicht 27 auf. Die Schichtdicken sind frei wählbar und werden entsprechend den erforderlichen Materialien und der Einbausituationen angepasst. Somit kann die Trägerschicht 26 auch weniger als 3 mm aufweisen, sofern die Deckschicht 27 eine hinreichende Schichtdicke aufweist, sodass vorzugsweise eine stabilisierte Luftströmung ermöglicht wird.

Die Anforderungen an das Design als auch die Größe der Vorrichtung können beispielsweise auch die Verwendung und die Verbindungstechnik der Materialien für die Herstellung der Luftleitvorrichtung 21 bestimmen. In einer bevorzugten Ausgestaltung ist die Luftleitvorrichtung 21 als Zweikomponenten-Kunststoffspritz-teil ausgebildet, welches in einem Arbeitsgang hergestellt ist. Geeignete Materialien werden ausgewählt, um ein schnelles Herstellen und eine dauerhafte Verbindung zwischen den beiden Materialien zu ermöglichen. Beispielsweise können thermoplastische Kunststoffpaarungen, SEBS Weichkunststoffpaarungen, Hartkunststoffpaarungen oder dergleichen vorgesehen sein.

Alternativ ist ebenso erfindungsgemäß vorgesehen, dass die Deckschicht 27 und die Trägerschicht 26 zur Bildung einer Luftleitvorrichtung 21 deckungsgleich zueinander dauerhaft oder lösbar gefügt sind. Bei der Herstellung der Luftleitvorrichtung 21 durch Fügen können grundsätzlich jegliche Materialien verwendet werden, so dass beispielsweise auch Materialien oder Materialkombinationen aus Kunststoff, Fasern, Textilfasern, Metall, Leder, Holz oder Laminaten als Deckschicht verwendet werden können, um mit einer Trägerschicht deckungsgleich gefügt zu werden. Die Oberflächen der Materialien für Deckschichten 27 können des weiteren auch behandelt sein, wie beispielsweise durch Lackieren, Beschichten oder sonstige Veredelungsverfahren. Das Fügen der Deckschicht 27 und der Trägerstruktur 26 kann durch eine kraft- und/oder form- und/oder stoffschlüssige Verbindung gegeben sein. Beispielsweise kann durch Verkleben oder Ultraschallschweißen eine dauerhafte Verbindung hergestellt werden. Ebenso kann ein Anspritzen, Aufspritzen oder Hinterspritzen einer Schicht auf die andere Schicht vorgesehen sein. Dies ist materialabhängig.

In Figur 5 ist eine alternative Ausführungsform der Luftleitvorrichtung 21 zu Figur 4 dargestellt. Diese Ausführungsform weist eine Trägerstruktur 26 auf, bei der eine Ausnehmung 29 zwei Ausnehmungen 30 der Deckschicht 27 zugeordnet sind. Dadurch kann ein größerer Massendurchsatz unter Beibehaltung einer gerichteten Luftströmung erzielt werden.

Die in den Figuren beschriebenen Ausführungsformen sind nur beispielhaft. Im Rahmen der Erfindung kann auch vorgesehen sein, dass auf einer Trägerstruktur 26 mehrere Deckschichten 27 übereinander und/oder nebeneinander vorgesehen sind, um bestimmte Designeffekte zu erzielen. Beispielsweise kann die Deckschicht 27 aus mehreren Deckschichtsegmenten oder Deckschichtabschnitten zusammengesetzt sein, die in Material, Größe und/oder Form zumindest teilweise unterschiedlich ausgestaltet sind.

Ebenso kann vorgesehen sein, dass die Deckschicht 27 von mehreren Trägerstrukturen 26 getragen ist und die Trägerstrukturen 26 eine unterschiedliche Anzahl, Anordnung, Ausgestaltung und/oder Größe beziehungsweise Durchmesser der Ausnehmungen 29 aufweisen.

Auch ist eine beliebige Kombination der beiden vorgenannten Ausführungsformen möglich.

Der Einsatzbereich der erfindungsgemäßen Luftleitvorrichtungen 21 ist nicht auf die Anordnung im Austrittsbereich von einer oder mehreren Mitteldüsen 18 und Seitendüsen 19 beschränkt. Ebenso kann die Luftleitvorrichtung 21 auch für weitere Austrittsbereiche, wie beispielsweise in Figur 2 durch die Bezugsziffern 42 und 43 gekennzeichnet ist, vorgesehen sein. Eine Ansteuerung für diese Austrittsbereiche erfolgt durch das Luftverteilersystem 13, welches vorzugsweise ermöglicht, dass jeder Austrittsbereich einzeln angesteuert werden kann. Diese Ansteuerung kann in ein gesamtes Lüftungskonzept eingebunden sein. Bei dem Einbau der Luftleitvorrichtungen 21 in großflächige Austrittsbereiche können eine oder mehrere Luftleitvorrichtungen montiert sein, die zu einer gemeinsamen Luftleitvorrichtung verbunden oder zusammengesetzt sind.

## Patentansprüche

1. Luftleitvorrichtung zum Einleiten von auf einer Rückseite der Vorrichtung (21) zugeführten Luft in einen Raum, insbesondere einen Innenraum eines Fahrzeuges, mit einer als Luftleitkörper ausgebildeten Trägerstruktur (26), die eine Vielzahl von nebeneinander angeordneten Ausnehmungen (29) aufweist, die in einen Austrittsbereich (31) münden und der Austrittsbereich (31) eine Deckschicht (27) umfasst, welche Ausnehmungen (30) aufweiset, **dadurch gekennzeichnet, dass** die Ausnehmungen (31) der Deckschicht (27) deckungsgleich zu den Ausnehmungen (29) der Trägerstruktur (26) vorgesehen und in einem Arbeitsgang aus einem Material hergestellt sind oder als ein aus zwei Komponenten gespritztes Kunststoffteil ausgebildet sind oder die Trägerschicht (26) oder Deckschicht (27) als Einlegeteil vorgesehen sind und die weitere Schicht (26, 27) deckungsgleich mit den Ausnehmungen (29, 30) zu den Ausnehmungen (30, 29) angespritzt sind.

2. Luftleitvorrichtung nach Anspruch 1, **dadurch gekennzeichnet, dass** die Trägerstruktur (26) und die Deckschicht (27) als ein aus zwei Komponenten gespritztes Kunststoffteil aus einer thermoplastischen Materialpaarung hergestellt ist, die vorzugsweise licht- und/oder temperaturbeständig ist.

3. Luftleitvorrichtung nach Anspruch 1, **dadurch gekennzeichnet, dass** das als Deckschicht (27) oder Trägermaterial (26) ausgebildete Einlegeteil vor, während oder nach dem Anspritzen der weiteren Schicht (26, 27) in einen Endzustand umformbar ist.

4. Luftleitvorrichtung nach einem oder mehreren der vorstehenden Ansprüche, **dadurch gekennzeichnet, dass** die Ausnehmungen (29, 30) im Austrittsbereich (31) einen Durchmesser von 0,5 mm bis 10 mm, vorzugsweise im Bereich von 3 mm bis 7 mm, aufweisen.

5. Luftleitvorrichtung nach einem oder mehreren der vorstehenden Ansprüche, **dadurch gekennzeichnet, dass** die Ausnehmungen (29, 30) der Trägerstruktur (27) sich vom Austrittsbereich (31) in Richtung zur Rückseite der Trägerstruktur (26) erstrecken und wenigstens eine Länge von 3 mm aufweisen.

6. Luftleitvorrichtung nach einem oder mehreren der vorstehenden Ansprüche, **dadurch gekennzeichnet, dass** die Ausnehmungen (29, 30) rasterförmig in dem Austrittsbereich (31) vorgesehen sind.

## Claims

1. Air directing device for the introduction of air supplied on a rear side of the device (21) into a room, especially into the interior of a vehicle, with a carrier structure (26) designed as an air directing body having a plurality of recesses (29) arranged side by side which lead into an outlet area (31), and the outlet area. (31) comprising a covering layer (27) which comprises recesses (30), **characterized in that** the recesses (31) of the covering layer (27) are provided to be congruent with the recesses (29) of the carrier structure (26) and manufactured of one material in one operation or designed as one plastic part injection molded of two components, or the carrier layer (26) or the covering layer (27) being provided as an insert part and the additional layer (26, 27) being congruently molded on with the recesses (29, 30) to the recesses (30, 29).

2. Air directing device according to claim 1, **characterized in that** the carrier structure (26) and the covering layer (27) are manufactured of a plastic part molded from two components of a thermoplastic material combination which is preferably light-resistant and/or temperature-resistant.

3. Air directing device according to claim 1, **characterized in that** the insert part - designed as a covering layer (27) or as carrier material (26) - is deformable into a final condition before, during or after molding on the other layer (26, 27).

4. Air directing device according to any one or several of the preceding claims, **characterized in that** the recesses (29, 30) in the outlet area (31) are provided with a diameter ranging from 0.5 mm to 10 mm, preferably in a range of 3 mm to 7 mm.

5. Air directing device according to any one or several of the preceding claims, **characterized in that** the recesses (29, 30) of the carrier structure (27) extend from the outlet area (31) in the direction to the rear side of the carrier structure (26) and have at least a length of 3 mm.

6. Air directing device according to any one or several of the preceding claims, **characterized in that** the recesses (29, 30) are provided in grid shape in the outlet area (31).

## Revendications

1. Dispositif pour diriger l'air destiné à introduire de l'air, amené sur une face arrière du dispositif (21), dans un espace, en particulier un espace intérieur d'un véhicule, avec une structure porteuse (26) se présentant sous la forme d'un corps de direction d'air, laquelle comporte une pluralité de creux (29) disposés côte à côte qui débouchent dans une zone de sortie (31) et la zone de sortie (31) comprenant une couche de recouvrement (27) qui comporte des creux (30), **caractérisé en ce que** les creux (31) de la couche de recouvrement (27) sont prévus tels qu'ils coïncident avec les creux (29) de la structure porteuse (26) et sont fabriqués en une matière dans une opération de travail ou se présentent sous la forme d'une pièce en matière plastique injectée bicomposite ou la couche porteuse (26) ou la couche de recouvrement (27) est prévue en tant qu'insert et l'autre couche (26, 27) est surmoulée par injection, les creux (30, 29) coïncidant avec les creux (29, 30).

2. Dispositif pour diriger l'air selon la revendication 1, **caractérisé en ce que** la structure porteuse (26) et. la couche de recouvrement (27) sont fabriquées en tant que pièce en matière plastique injectée bicomposite à partir d'un accouplement de matières thermoplastiques, lequel est préférentiellement résistant à la lumière et/ou à la température.

3. Dispositif pour diriger l'air selon la revendication 1, **caractérisé en ce que** l'insert réalisé en tant que couche de recouvrement (27) ou matière porteuse (26) peut être mis dans un état final par formage avant, pendant ou après que l'autre couche (26, 27) a été surmoulée par injection.

4. Dispositif pour diriger l'air selon l'une ou plusieurs des revendications précédentes, **caractérisé en ce que** les creux (29, 30) dans la zone de sortie (31) ont un diamètre allant de 0,5 mm à 10 mm, et de préférence de l'ordre de 3 mm à 7 mm.

5. Dispositif pour diriger l'air selon l'une ou plusieurs des revendications précédentes, **caractérisé en ce que** les creux (29, 30) de la structure porteuse (27) s'étendent depuis la zone de sortie (31) en direction de la face arrière de la structure porteuse (26) et ont au moins une longueur de 3 mm.

6. Dispositif pour diriger l'air selon l'une ou plusieurs des revendications précédentes, **caractérisé en ce que** les creux (29, 30) sont prévus en forme de grille dans la zone de sortie (31).
